# EUROPEAN PATENT APPLICATION

(11) **EP 1 947 826 A1**
(43) Date of publication of application: **23.07.2008**
(21) Application number: 08100343.6
(22) Date of filing: 11.01.2008
(51) Int. Cl.: H04L 29/08, G06F 17/30

(54) **Congestion information delivery system, mobile terminal, server, method of congestion information delivery and computer-readable medium storing program**

(30) Priority: 16.01.2007 JP 2007007301
(71) Applicant: NEC CORPORATION, Tokyo (JP)
(72) Inventor: Okamura, Yusasku, Tokyo (JP)
(74) Representative: Betten & Resch

(57) **Abstract**

Congestion degree is measured by providing a function for measuring congestion degree of surroundings for a terminal itself and by sharing the information obtained.

At least one of cellular phones 102 measures congestion degree of surroundings by a congestion degree measurement unit 102B, transmits it to a main server 104 as congestion information, the main server 104 aggregates the congestion information from the cellular phones 102, stores it, and provides the congestion information relating to a specific location requested for the requester.

## Description

This application is based upon and claims the benefit of priority from Japanese paten application No. 2007-007301, filed on January 16, 2007, the disclosure of which is incorporated herein in its entirety by reference.

### BACKGROUND OF THE INVENTION

### Field of the Invention

The present invention pertains to a technology for delivering information on congestion of a specific location.

### Description of the Related Art

Traffic congestion information on a road can be known through road traffic information by television and radio, a road information display panel on a road or at an express way gate, a telephone inquiry to a road traffic information center, a car navigation system including a VICS (Vehicle Information Communications System) receive function or the like.

However, in order to know congestion of a specific location such as a theme park, an amusement facility or the like, the only way left is to call directly the specific location, and this poses a problem that there is no way to know the information readily and in real time. With regard to this problem, a conventional method used for measurement of congestion information is such that each of mobile terminals with a position information measurement function is caused to report its position information, and the information is aggregated by a server to measure congestion degree.

Patent Document 1 Japanese Patent Application Laid-Open No. 2004-80439

Patent Document 2 Japanese Patent application Laid-Open No. 2006-157502

However, with a conventional method, it is time consuming to cause all terminals to report position information thereof to take measurement of congestion degree.

### SUMMARY OF THE INVENTION

The present invention is made to solve the problems explained above. An exemplary object of the present invention is to make a terminal itself possess of a function to measure congestion degree around surroundings and to share the information in order to measure congestion degree.

A congestion information delivery system according to an exemplary aspect of the invention is characterized in that at least one of mobile terminals measures congestion degree of surroundings, transmits it to a server as congestion information, said server aggregates the congestion information from said mobile terminal, stores it, and provides the congestion information relating to a specific location requested for a requestor.

A mobile terminal according to an exemplary aspect of the invention measures congestion degree of surroundings and transmits it to said server as congestion information so as to cause the server to aggregate the congestion information and to provide the congestion information relating to a specific location requested for the requester.

A server according to an exemplary aspect of the invention is characterized in that at least one of mobile terminals measures congestion degree of surroundings, transmits it to the server as congestion information, said server receives the congestion information, that is congestion degree of the surroundings, measured by at least one of the mobile terminals, aggregates it, stores it, and provides the congestion information relating to a specific location requested for the requestor.

A congestion information delivery method according to an exemplary aspect of the invention is characterized in that at least one of mobile terminals measures congestion degree of surroundings, transmits it to the server as congestion information, said server aggregates the congestion information from said mobile terminal, stores it, and provides the congestion information relating to a specific location requested for the requestor.

A computer-readable medium storing a program according to an exemplary aspect of the invention causes a computer system to receive congestion information, which is congestion degree of surroundings measured by at least one of mobile terminals, aggregates and stores the congestion information, and provides the congestion information relating to a specific location requested for a requestor.

### BRIEF DESCRIPTION OF THE DRAWINGS

The objects and features of the present invention will become more apparent from the consideration of the following detailed description taken in conjunction with the accompanying drawings, in which:
FIG. 1 is a drawing showing outline of a network comprising a cellular phone with a GPS (Global Positioning System) function and a server according to an exemplary embodiment of the present invention;
FIG. 2 is a drawing to explain data stored in a database 104D of a main server 104;
FIG. 3 is a drawing to explain an example of operations of a congestion information providing unit 104B of the main server 104;
FIG. 4 is a drawing to explain range of position data with regard to a specific name of place stored in a database 105A of a name-of-place range-of-position conversion and congestion degree index server 105;
FIG. 5 is a drawing to explain data stored in a congestion degree index database 105B of a server 105;
FIG. 6 is a flowchart to explain operations of a telephone number/IP information, position information addition unit 102A of a cellular phone 102 with the GPS function;
FIG. 7 is a flowchart to explain a series of operations of the main server 104, an information monitoring unit 104A, the server 105.

### EXEMPLARY EMBODIMENT

Referring to drawings, exemplary embodiments of the present invention will be explained in detail.

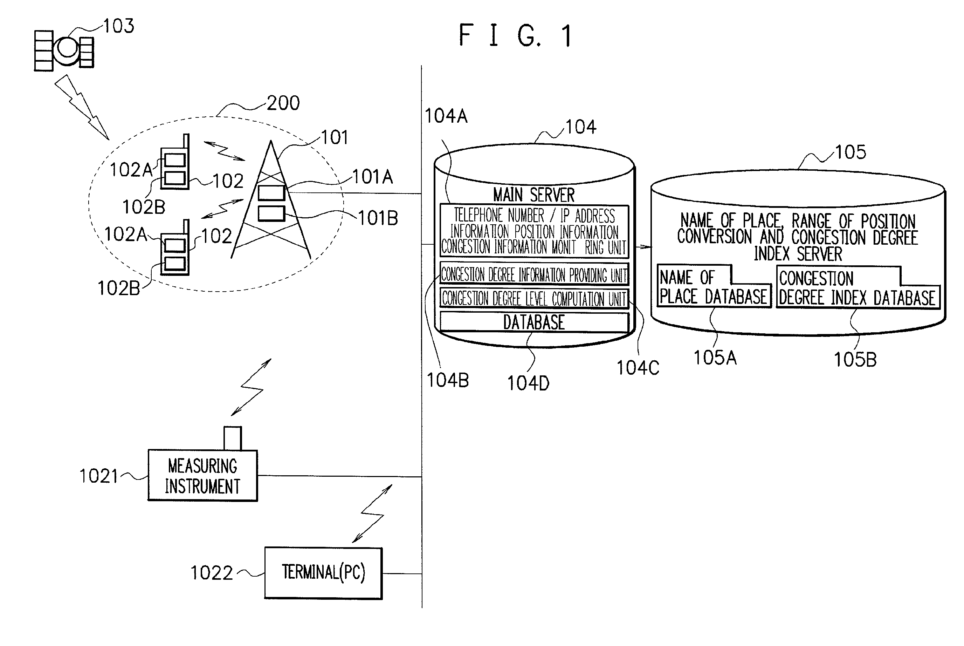

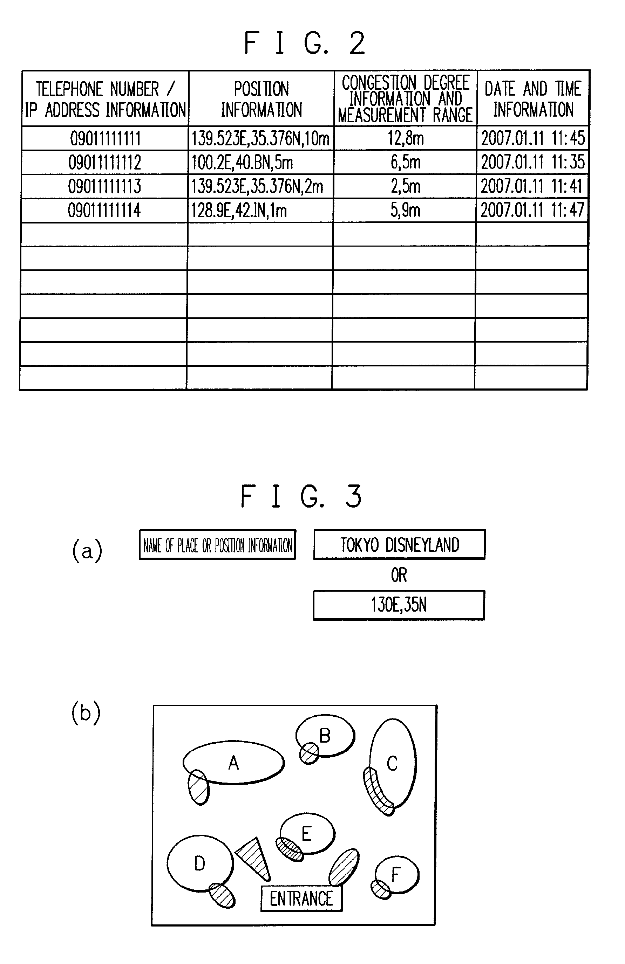

FIG. 1 and FIG. 2 schematically show the congestion information delivery system according to an exemplary embodiment. FIG. 1 is a drawing showing outline of a network comprising a cellular phone with a GPS (Global Positioning System) function and a server according to the exemplary embodiment.

As shown in FIG. 1, there are provided a plurality of cellular phones 102 in each of areas 200 of a plurality of base stations 101, each of the cellular phones 102 includes a telephone communication function and a communication function, and is connected to the base station 101 by a wireless circuit.

Each of the plurality of base stations 101 is provided with a telephone number/IP address information, position information, congestion information extraction unit 101A and a transmitting and receiving unit 101B, which will be described later.

Each of the plurality of cellular phones 102 includes the GPS function, is connected to a plurality of GPS satellites 103 which are artificial earth satellites via a satellite circuit, and position information of the cellular phone 101 is provided thereto in the form of two-dimensional or three-dimensional information based on an electric wave from the GPS satellites 103.

Each of the plurality of cellular phones 102 is provided with a telephone number/IP address information, position information, congestion information addition unit 102A, and when connected to the Internet, the addition unit 102A is used to add telephone number/IP address information, position information and congestion information received from the GPS satellites 103 into upward data to the base station 101 for transmission.

The extraction unit 101A of the base station 101 extracts from the upward signal received from the cellular phones 102, the telephone number/IP address information, position information, congestion information added by the addition unit 102A.

Further, a congestion degree measurement unit 102B for measuring congestion degree of surroundings is provided for each of the plurality of cellular phones 102, which allows realization of measuring congestion degree by measuring the number of objects such as human being in the surroundings through an infrared ray sensor, an acoustic sensor, image processing by camera mechanism, a function of measuring the number of electric waves of cellular phones in the surroundings or the like. For each of technologies such as image processing, an infrared ray sensor, an acoustic sensor, those known in the art are used.

Here, as for the number of objects which is used as the basis of congestion degree, the number of objects such as cellular phones, human being are mentioned, although it is not limited thereto, and all matters are inclusive as long as the congestion degree of which can be measured.

As for measurement of congestion degree at points where no cellular phone 102 is available and points where the number of people walking is less, a measuring instrument 1021 may be provided as an aid to measurement.

Each base stations 101 is connected to a main server 104 via a transmitting and receiving unit 101B. The main server 104 receives telephone number/IP address information, position information and a congestion information request from the cellular phone 102 with the GPS function and executes control as follows according to the information.

Further, the main server 104 is provided with a telephone-number/IP-address-information position-information congestion-information monitoring unit 104A, the monitoring unit 104A monitors that the extraction unit 101A of the base station 101 extracts the telephone number/IP address information, position information and congestion information received from the cellular phone 102, and acquires the telephone number/IP address information, position information and congestion information thus extracted together with date and time information of the extraction.

Further, a database 104D is provided for the main server 104. The database 104D stores the date and time information of the extraction together with the telephone number/IP address information, position information and congestion information of the cellular phone 102 with the GPS function, which the monitoring unit 104A acquired from the extraction unit 101A.

Moreover, a congestion degree information providing unit 104B is provided for the main server 104. The unit 104B includes an address, the main server 104 is accessed from the cellular phone 102 and a terminal 1022 which are capable of connecting to the Internet, and when the congestion information is requested, accepts this request and provides the congestion information.

Further, a congestion degree level computation unit 104C is provided for the main server 104. The congestion degree level computation unit 104C designates a specific name of place to the unit 104B, and when the congestion information is requested, aggregates the congestion degree information from each cellular phone 102 with the GPS function, from the database 104D, and calculates the number of entries, and the main server 104 acquires, based on the number of entries, congestion degree level from a name-of-place range-of-position conversion and congestion degree index server 105 which will be described later.

The main server 104 is connected to the server 105. The server 105 includes a database 105A. The database 105A stores range of position that is identified by degree of longitude, degree of latitude, and altitude, in the form of two-dimensional and three-dimensional data for a plurality of specific names of places, and when position information is designated by the main server 104, converts the range of position to which the position information designated by the database 105A belongs to a specific name of place.

Further, the server 105 includes a congestion degree index database 105B. The database 105B stores indexes of congestion degree level based on the number of people accommodated of a plurality of specific names of places, and when the congestion degree of the cellular phone 102 with the GPS function present in range of position of a specific name of place is shown from the main server 104, calculates congestion degree level of the specific name of place designated based on the congestion degree, and provides the congestion level thus calculated for the main server 104.

The main server 104 and the index server 105 may be realized by programs executed by a computer.

FIG. 2 is a drawing to explain the data stored in the database 104D of the main server 104 in FIG. 1.

As shown in FIG. 2, the position information, the congestion degree information, the renewal date and time information are stored in the database 104D for every telephone number or IP address of the cellular phone received.

FIG. 3 is a drawing to explain an example of operations of the congestion degree information providing unit 104B of the main server 104. As shown in FIG. 3 (a), when access is attempted from the cellular phone 102 with the GPS function, the cellular phone or the terminal 1022 without the GPS function to the main server 104, the unit 104B causes the cellular phone 102 with the GPS function, the cellular phone or the terminal 1022 without the GPS function to acquire page information, and a display for entering a specific name of place or position information in order to request the congestion level information is given in the page information thus acquired and a decision choice display is made on the display unit.

The user enters a specific name of place or position information that he/she wishes to know its congestion status and executes a decision choice. Then, the specific name of place or the position information entered is transmitted by wireless circuit to the unit 104B of the main server 104 from the cellular phone 102 with the GPS function, the cellular phone or the terminal 1022 without the GPS function via the base station 101.

In addition, the specific name of place or the position information may be entered by designating a specific point on a map displayed on the display unit.

As shown in FIG. 3B, the unit 104B transmits congestion level information to the cellular phone 102 with the GPS function, the cellular phone or the terminal 1022 without the GPS function which requested the information, and causes the cellular phone 102 with the GPS function, the cellular phone or the terminal 1022 without the GPS function to display the congestion level on the display unit to allow the user to confirm the congestion status. In addition, display by color depending on congestion level may be used.

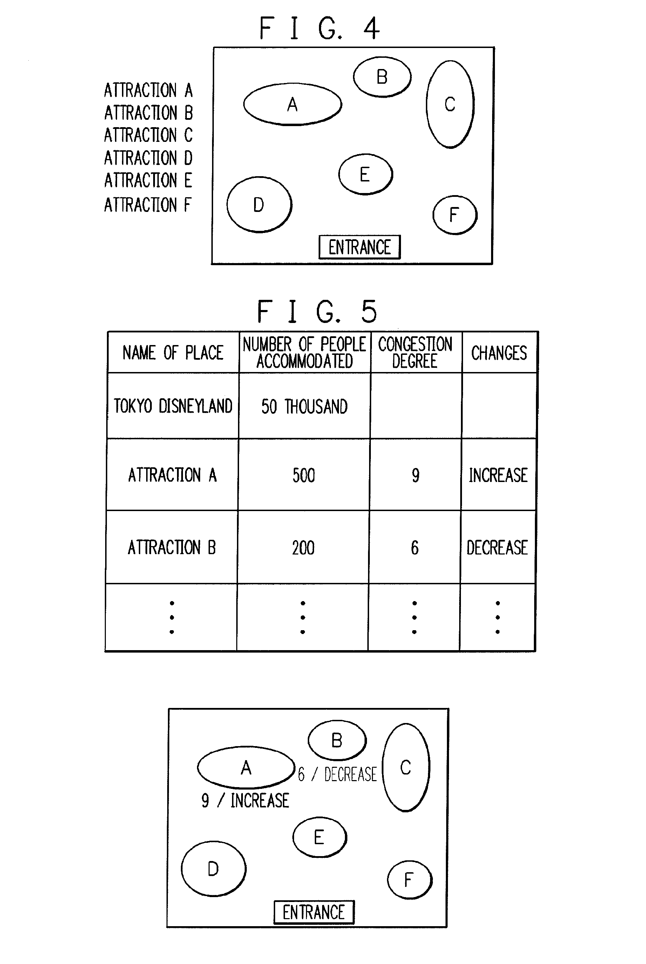

FIG. 4 is a drawing to explain range of position data with regard to specific name of place stored in the database 105A of the server 105 in FIG. 1.

As shown in FIG. 4A and 4B, the range of position information for every specific name of place is stored in the database 105A in the form of two-dimensional and three-dimensional data, and range of position enclosed is converted to a specific name of place "Tokyo Disneyland". Moreover, modification, addition, deletion of the information can be made as needed to the database 105A.

FIG. 5 is a drawing to explain data stored in the database 105B of the index server 105 in FIG. 1.

As shown in FIG. 5, in the database 105B stores the number of people accommodated information for every specific name of place, and congestion degree level according to the number of visitors, that is the number of objects where the cellular phone 102 with the GPS function is present, with regard to the number of people accommodated. Further, it is possible to hold congestion degree level in more detailed order such as a waiting line at an entrance gate and at each attraction, the congestion degree level of shops and restaurants.

Further, in the database 105B stores increase and decrease value (changes) of the visitors for every specific name of place. Moreover, modification, addition, deletion of the information can be made as needed to the database 105B.

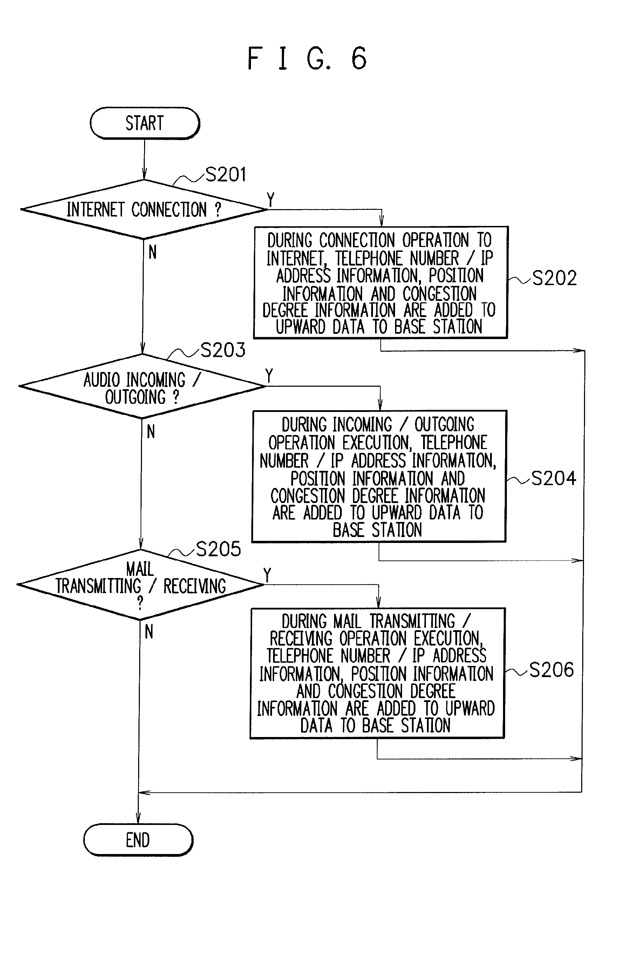

FIG. 6 is a flowchart to explain operations of the unit 102A of the cellular phone 102 with the GPS function in FIG. 1.

As shown in FIG. 6, first, in step 201, the unit 102A judges whether or not the Internet connection is available with the cellular phone 102, and if the Internet connection is not available, it proceeds to Step 203.

In Step 202, when the Internet connection is available, the unit 102A adds, when operation of the Internet connection is executed, telephone number/IP address information, position information and congestion information to the upward data to the base station 101.

In this case, transmission of three-dimensional information comprising own station telephone number/IP address information and degree of longitude, degree of latitude, altitude from the cellular phone 102 with the GPS function is considered to be information transmitted as ordinary operation as an existing communication network system, regardless of whether user desires congestion information service or not.

Next, in Step 203, the unit 102A judges whether or not there is an audio incoming in the cellular phone 102, and when there is no audio incoming and outgoing, it proceeds to Step 205.

In Step 203, when there is an audio incoming, the unit 102A adds the telephone number/IP address information, position information, and congestion information to the upward data to the base station 101 the audio incoming operation is executed, and terminates the processing.

In Step 205, the unit 102A judges whether or not there is mail transmitting and receiving in the cellular phone 102, and when there is no mail transmitting and receiving and terminates the processing.

In Step 206, when there is mail transmitting and receiving, the unit 102A adds the telephone number information, position information, and congestion information to the upward data to the base station 101, when operation of mail transmitting and receiving is executed, and terminates the processing.

Although the cellular phone 102 with the GPS function needs, at standby time, to register its position to the network whenever it moves in the registered area, the telephone number information and position information from the GPS may be added at the time of registration of position to the network at standby time.

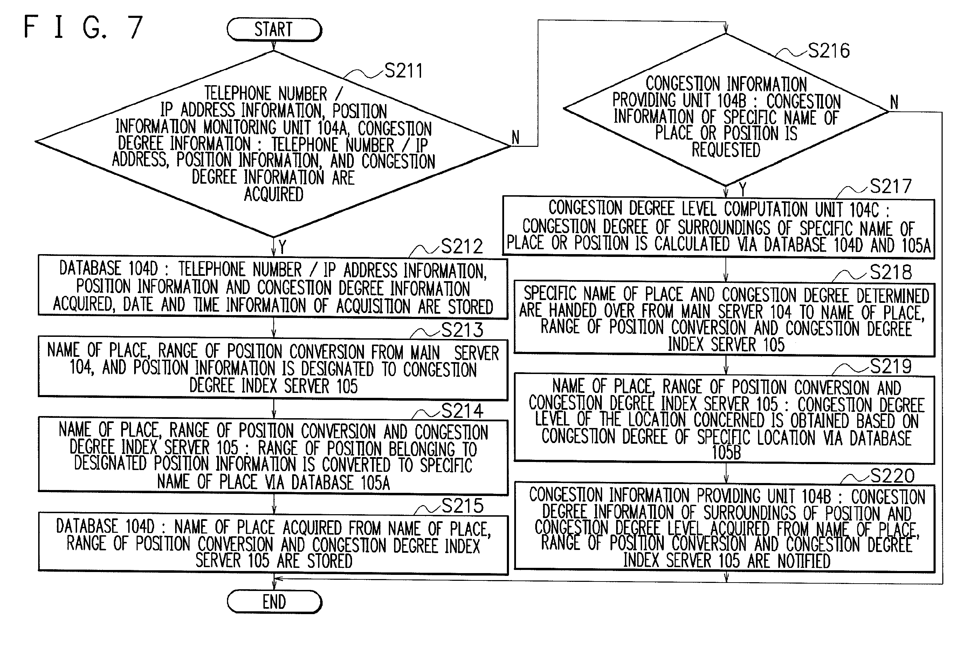

FIG. 7 is a flowchart to explain a series of operations of the main server 104, the server 105 shown in FIG. 1.

As shown in FIG. 7, in Step 211, the unit 104A of the main server 104 monitors the unit 101A of the base station 101, monitors whether or not the base station 101 received the telephone number/IP address information, position information,; and congestion information from the cellular phone 102 with the GPS function, and extracted by the unit 101A, and if the telephone number/IP address information, position information, congestion information are not acquired, it proceeds to Step 216.

In Step 212, the database 104D stores the telephone number/IP address information, position information and congestion information acquired, and the date and time information of acquisition.

In Step 213, position information is designated from the main server 104 to the index server 105.

In Step 214, the server 105 converts the range of position belonging to the designated position information to a specific name of place via the database 105A.

In Step 216, the congestion degree information providing unit 104B judges with regard to the main server 104 whether or not there is a congestion information request of a specific name of place. A user who wishes to know congestion status accesses to the main server 104 using the cellular phone 102 with the GPS function via URL address, and executes the congestion information request by designating the specific name of place or the position from the page information acquired. If the congestion information request is not attempted, the processing is terminated. As mentioned previously, the cellular phone or the terminal 1022 without the GPS function can be used as long as it is capable of being connected to the Internet through an existing communication network system.

In Step 217, the unit 104C aggregates the congestion degree of the cellular phones or people present in the surroundings of a position of a specific location via the database 104D.

In Step 218, the specific name of place and the determined congestion degree are handed over from the main server 104 to the server 105.

In Step 219, in the server 105, based on the specific location and congestion degree of the specific location, the congestion degree level of that place is obtained via the database 105B.

In Step 220, the unit 104B notifies the user who requested of the congestion degree information of the position, the surroundings, and the congestion degree level acquired from the server 105. In the user's cellular phone 102 with the GPS function, the congestion degree and the congestion degree level are displayed together with a map in two-dimensional or three-dimensional fashion in the page information acquired, and the processing is terminated. In the notification mentioned above, the main server 104 can notify, in addition to the congestion degree level information, the number of people accommodated, or the number of people information or the like, that is the congestion degree of the cellular phone 102 with the GPS function calculated as the information of the approximate number of visitors.

On the other hand, in a business model in the specific location congestion information delivery system according to the exemplary embodiment composing the main server 104, the server 105, profits are produced by collecting fixed monthly charge of membership subscription system or by charging connection fees (billing fee for information amount [packet] transmitted and received), for the price of providing congestion information for the user, when the congestion information is acquired.

As explained above, according to the exemplary embodiment, the cellular phone with the GPS function is designed to transmit the telephone number information and position information at the time of connection to the Internet, audio incoming and outgoing, transmitting and receiving of a mail, and therefore it is now possible for the main server to grasp the telephone number/IP address information, position information and congestion information and to monitor the congestion degree in the range of position of an arbitrary specific name of place. A user who wishes to know congestion status of a specific name of a place or position can know the congestion information of the specific name of place or the position needed by designating the specific name of place or the position of target from the cellular phone to the main server. Congestion information can be utilized from cellular phone or terminal capable of connecting to the Internet even if the GPS function is not provided thereto, as well as cellular phone with the GPS function, thereby expanding range of utilization.

According to the present invention, congestion degree can be measured with ease while a terminal itself is made to possess a function to measure congestion degree and information therefrom is shared.

Each of the embodiments described above is a preferable embodiment of the present invention, and various alterations are possible without departing from the scope of the present invention. For example, functions of the apparatus may be realized in such that a program for realizing functions of each cellular phone and each server is read into the apparatus and executed. Further, the program may be transmitted to other computer system by transmitted via CD-ROM or an optical magnetic disk which is computer-readable recording medium, or via the Internet or telephone circuit which is transmission media.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

According to one embodiment, the
congestion degree is measured by providing a function for measuring congestion degree of surroundings for a terminal itself and by sharing the information obtained.

At least one of cellular phones 102 measures congestion degree of surroundings by a congestion degree measurement unit 102B, transmits it to a main server 104 as congestion information, the main server 104 aggregates the congestion information from the cellular phones 102, stores it, and provides the congestion information relating to a specific location requested for the requester.

## Claims

1. A congestion information delivery system, wherein at least one of mobile terminals measures congestion degree of surroundings and transmits the congestion degree to a server as congestion information, and
said server aggregates the congestion information from said mobile terminal, stores the congestion information, and provides the congestion information relating to specific location requested for a requestor.

2. The congestion information delivery system according to Claim 1, wherein said congestion degree is a number of the mobile terminals by electric wave measurement.

3. The congestion information delivery system according to Claim 1 or 2, wherein said congestion degree is a number of people or articles which are considered to be objects by image processing, an infrared ray sensor, an acoustic sensor or the like.

4. A mobile terminal that measures congestion degree of surroundings, and transmits the congestion degree as the congestion information to said server, in an attempt to cause the server to aggregate the congestion information and to provide the congestion information relating to a specific location requested for a requestor.

5. The mobile terminal according to Claim 4, wherein said congestion degree is a number of the mobile terminals by electric wave measurement.

6. The mobile terminal according to Claim 4 or 5, wherein said congestion degree is a number of people or articles which are considered to be objects by image processing, an infrared ray sensor, an acoustic sensor or the like.

7. A server wherein at least one of mobile terminals measures congestion degree of surroundings and transmits the congestion degree to the server as congestion information, and
said server receives congestion information, which is congestion degree of surroundings, measured by at least one of mobile terminals, aggregates and stores the congestion information, and provides the congestion information relating to a specific location requested for a requestor.

8. The server according to Claim 7, wherein said congestion degree is a number of the mobile terminals by electric wave measurement.

9. The server according to Claim 7 or 8, wherein said congestion degree is a number of people or articles which are considered to be objects of image processing, an infrared ray sensor, an acoustic sensor or the like.

10. A congestion information delivery method, wherein at least one of mobile terminals measures congestion degree of surroundings and transmits the congestion degree to the server as congestion information, and
said server aggregates the congestion information from said mobile terminal, stores the congestion information, and provides the congestion information relating to a specific location requested for a requestor.

11. The congestion information delivery method according to Claim 10, wherein said congestion degree is a number of the mobile terminals by electric wave measurement.

12. The congestion information delivery method according to Claim 10 or 11, wherein said congestion degree is a number of people or articles which are considered to be objects of image processing, an infrared ray sensor, an acoustic sensor or the like.

13. A computer-readable medium storing a program causing a computer system to receive congestion information, which is congestion degree of surroundings measured by at least one of mobile terminals, aggregates and stores the congestion information, and provides the congestion information relating to a specific location requested for a requestor.
